# EUROPÄISCHE PATENTSCHRIFT

(11) **EP 3 998 921 B1**
(45) Veröffentlichungstag und Bekanntmachung des Hinweises auf die Patenterteilung: **17.08.2022**
(21) Anmeldenummer: 20797017.9
(22) Anmeldetag: 16.10.2020
(51) Int. Cl.: A47J 42/04, A47J 42/38

(54) **OBERTEIL FÜR EIN GEWÜRZMAHLWERK**
UPPER PART FOR A SPICE MILL
PIÈCE SUPÉRIEURE POUR MOULIN À ÉPICES

(30) Priorität: 18.10.2019 AT 509002019
(43) Veröffentlichungstag der Anmeldung: 25.05.2022
(73) Patentinhaber: Joma Kunststofftechnik GmbH, 2345 Brunn am Gebirge (AT)
(72) Erfinder: FRIES, Rudolf, 2572 Kaumberg (AT)
(74) Vertreter: SONN Patentanwälte OG
(86) Internationale Anmeldenummer: PCT/AT2020/060375
(87) Internationale Veröffentlichungsnummer: WO 2021/072472

(56) Entgegenhaltungen:
- EP-A1- 2 454 979
- EP-A1- 3 181 023
- WO-A1-2020/124114

## Beschreibung

Die Erfindung betrifft ein Oberteil für ein Gewürzmahlwerk, welches zumindest teilweise aus Kunststoffmaterial besteht und folgendes aufweist:
- eine obere Deckfläche mit zumindest zwei Öffnungen, insbesondere Durchtrittsöffnungen für gemahlene Gewürze, welche entlang eines gedachten Kreises um eine Drehachse angeordnet sind,
- eine umlaufende Mantelfläche und
- ein Mahlelement oder eine Halterung für das Mahlelement.

Weiters betrifft die Erfindung ein Spritzgusswerkzeug zur Herstellung des Oberteils sowie ein Verfahren zur Herstellung des Oberteils unter Verwendung des Spritzgusswerkzeugs. Gattungsgemäße Gewürzmahlwerke weisen üblicherweise einen Oberteil und einen Unterteil bzw. einen Rotor und einen Stator auf, die beide mit Mahlelementen zum Zermahlen von Gewürzen versehen sind, wobei in der Regel der Oberteil gegenüber dem fest mit einem Behälter verbundenen Unterteil drehbar gelagert ist. Durch Drehung des Oberteils gegenüber dem Unterteil werden die Mahlelemente relativ zueinander in Drehung versetzt und dadurch das Gewürz in einem Mahlspalt, der sich zwischen den Mahlelementen befindet, zermahlen.

Um eine drehbare Verbindung des Oberteils mit dem Unterteil herzustellen, ist in der Regel am unteren Rand der umlaufenden Mantelfläche des Oberteils ein umlaufender, nach innen zur Drehachse hinweisender Vorsprung vorgesehen, welcher in eine korrespondierende Nut am Unterteil eingreift. Durch diese Art der Verbindung wird die Drehbarkeit zwischen Oberteil und Unterteil ermöglicht, ein ungewolltes Lösen des Oberteils vom Unterteil weitgehend vermieden.

Typischerweise werden das Oberteil und das Unterteil in einem Kunststoffspritzgussverfahren hergestellt. Dabei wird ein aushärtendes Kunststoffmaterial in einen Hohlraum eines Spritzgusswerkzeugs eingebracht, der die Form des zu erzeugenden Unter- bzw. Oberteils vorgibt. Um den Vorsprung an der Mantelfläche des Oberteils zu erzeugen, weist das Spritzgusswerkzeug üblicherweise eine umlaufende Einkerbung auf. Nach dem Aushärten muss der Oberteil nachteiligerweise unter Krafteinwirkung von der Spritzgussform (bzw. der Einkerbung) abgezogen werden, wodurch der Oberteil, insbesondere die Mantelfläche und der Vorsprung, kurzzeitig verformt wird (sogenannte Zwangsentformung). Dabei kann das Material geschwächt oder der Oberteil sogar zerstört werden. Relativ sprödes Kunststoffmaterial kann daher aufgrund der erforderlichen Zwangsentformung gar nicht eingesetzt oder nur mit nicht akzeptablen Ausschussraten.

Um den Produktionsausschuss gering zu halten, wird im Stand der Technik bisweilen der umlaufende Vorsprung klein gehalten und hinterschneidungsfrei ausgeführt. Eine Hinterschneidung bzw. zumindest ein 90°-Winkel der Anlagefläche eines Schnappelements gegenüber der Oberfläche, von welchem das Schnappelement vorsteht, und/oder eine Vergrößerung des Vorsprungs hätte jedoch den Vorteil der besseren Haltewirkung am Unterteil.

Aus dem Stand der Technik sind Gewürzmühlen und Gewürzmahlwerke beispielsweise aus GB 2 217 231 A, DE 202 17 145 U1, US 2014/0319255 A1, EP 2 454 979 A1 und EP 3 181 023 A1 bekannt. Die WO 2020/124114 A1 bzw. die EP 3 897 319 A1 bildet einen Stand der Technik nach Art. 54(3) EPÜ.

Im Lichte dieser Ausführungen ist es daher Aufgabe der vorliegenden Erfindung, die Nachteile des Standes der Technik zu minimieren oder gänzlich zu beseitigen. Insbesondere ist es Aufgabe der vorliegenden Erfindung, einen einfach zu produzierenden Oberteil zu schaffen, der bei der Herstellung ohne Verformung von einem Spritzgusswerkzeug abgezogen werden kann. Zudem ist es Aufgabe der vorliegenden Erfindung, ein Verfahren und ein Spritzgusswerkzeug zur Herstellung eines solchen Oberteils zu bereitzustellen.

Gelöst wird diese Aufgabe zunächst durch die Merkmale des Anspruch 1.

Erfindungsgemäß ist in Draufsicht fluchtend zu den zumindest zwei Öffnungen jeweils ein vorzugsweise elastisch verformbares Schnappelement, mit welchem der Oberteil mit einem Unterteil drehbar verbindbar ist, vorgesehen, wobei die Schnappelemente jeweils einen von der jeweiligen Öffnung in Richtung des Mahlelements oder der Halterung abstehenden Steg mit einer nach innen zu der Drehachse weisenden Schnappnase aufweisen. Durch die Anordnung der Schnappelemente an den Öffnungen kann ein Spritzgusswerkzeug mit einem Formgebungselement zur Ausformung der Schnappelemente verwendet werden, welches vor dem Abnehmen des Oberteils von dem Spritzgusswerkzeug durch die Öffnungen entfernt werden kann. Folglich kann das Oberteil im Wesentlichen ohne Zwangsentformung von dem Spritzgusswerkzeug abgenommen werden. Im Vergleich dazu wird beim Stand der Technik, wie eingangs beschrieben, der umlaufende, nach innen weisende Vorsprung bzw. die umlaufende Mantelfläche beim Abziehen von dem Spritzgusswerkzeug verformt. Dies kann, wie oben beschrieben, zu Beschädigungen am Oberteil führen. Bei dem erfindungsgemäßen Oberteil wird dies vermieden und es sogar ermöglicht, Schnappelemente mit Hinterschneidungen auszubilden. Somit kann mit dem erfindungsgemäßen Oberteil nicht nur der Produktionsausschuss minimiert, sondern auch die Haltewirkung des Oberteils am Unterteil verbessert werden. Zudem können vorteilhafterweise auch relativ spröde Kunststoffmaterialien verarbeitet werden. Als Öffnung kann insbesondere eine Durchtrittsöffnung für gemahlene Gewürze fungieren. Daher ist es nicht notwendig, eigens für den Herstellungsprozess vorgesehene Öffnungen an der Deckfläche zu verwenden. Die umlaufende Mantelfläche kann mit einem Außenrand der Deckfläche verbunden sein und im Wesentlichen zylindermantelförmig, gegebenenfalls mit einer Außen- und/oder Innenwölbung, ausgebildet sein. Auch die Deckfläche kann gegebenenfalls gewölbt oder abgestuft sein. Der Oberteil kann das Mahlelement, beispielsweise einen Mahlkonus mit Mahlvorsprüngen, an einer Innenseite der Deckfläche ausbilden oder an der Innenseite eine Halterung für das Mahlelement aufweisen. Eine Halterung für das Mahlelement besitzt den Vorteil, dass das Mahlelement ausgewechselt werden kann und auch Mahlelemente verwendet werden können, die aus einem anderen Material als das Oberteil bestehen. Beispielsweise kann vorgesehen sein, dass der Oberteil aus einem Kunststoffmaterial und das Mahlelement aus einem Keramikmaterial besteht. Das Oberteil kann insbesondere auch aus einem biologisch abbaubaren Kunststoff, welcher vergleichsweise spröde sind hergestellt werden. Insbesondere kann der Oberteil aus Polylactid (PLA) bestehen. Vorzugsweise steht das Schnappelement von der Deckfläche insbesondere in Richtung des Mahlelements oder in Richtung der Halterung für das Mahlelement ab.

Für die Zwecke dieser Offenbarung beziehen sich Richtungsangaben wie "oben", "unten", "innen" und "außen" auf eine Ruhestellung, in welcher der Oberteil bzw. das Gewürzmahlwerk üblicherweise mit einem Behälter verbunden ist, und der Behälter auf der der Aufnahmeöffnung gegenüberliegenden Bodenfläche aufgestellt ist. In diesem bestimmungsgemäßen Ruhezustand befindet sich die Deckfläche "oben" und das Mahlelement bzw. die Halterung für das Mahlelement "innen". "Nach innen" bedeutet zur Drehachse des Oberteils hinweisend. "Nach außen" bedeutet von der Drehachse des Oberteils wegweisend.

Um die Haltewirkung zu erhöhen, sind zumindest zwei, vorzugsweise zumindest drei, Öffnungen vorgesehen, welche entlang eines gedachten Kreises angeordnet sind. Die Öffnungen sind vorzugsweise symmetrisch um die durch das Mahlelement bzw. die Halterung verlaufende Drehachse des Oberteils angeordnet.

In einer Ausführungsform kann vorgesehen sein, dass fluchtend zu jeder Öffnung ein Schnappelement angeordnet ist, wobei die Schnappelemente voneinander beanstandet sind. Die Anzahl der Schnappelemente ist mit der Anzahl der Öffnungen begrenzt, da jeweils das entsprechende Formgebungselement durch die Öffnung in der Deckfläche entfernt wird, um eine Zwangsentformung zu vermeiden. Vorteilhafterweise wird die Anzahl der Schnappelemente der Anzahl der Öffnungen entsprechen. Durch das Vorhandensein mehrerer, vorteilhafterweise über den Umfang vorzugsweise gleichmäßig verteilt angeordneter Schnappelemente und deren Beabstandung zueinander wird auch eine gleichmäßige Haltewirkung erzielt.

Weiters können die Öffnungen und die Schnappelemente in Draufsicht kreisbogenförmig sein. Vorzugsweise sind der innere und der äußere Radius der kreisbogenförmigen Öffnung(en) konzentrisch zum Außenumfang der Deckfläche bzw. der Mantelfläche gewählt. Der Krümmungsradius der Kreisbogenform ist vorzugsweise an den Krümmungsradius eines umlaufenden Schnappvorsprungs des Unterteils angepasst sein. Durch die Kreisbogenform kann die Haltewirkung des Oberteils am Unterteil und die Drehbarkeit des Oberteils gegenüber dem Unterteil verbessert werden.

Die Schnappelemente weisen jeweils einen von der jeweiligen Öffnung in Richtung des Mahlelements oder der Halterung abstehenden, vorzugsweise elastisch verformbaren Steg mit einer Schnappnase auf. Die Schnappnase weist nach innen zu einer Drehachse hin.

Der Steg kann im Wesentlichen rechtwinkelig zu der Deckfläche angeordnet sein. Der Steg kann sich an einem äußeren, der Drehachse oder der Symmetrieachse abgewandten Rand der Öffnung oder an einem inneren, der Drehachse oder der Symmetrieachse zugewandten Rand der Öffnung befinden. Um beim Verbinden der Schnappelemente die Auslenkung des Stegs möglichst gering zu halten, ist es vorteilhaft, wenn die Schnappnase an einem von der Deckfläche abgewandten Ende des Stegs angeordnet ist.

Um die Haltewirkung weiter zu verbessern und ein ungewolltes Lösen des Oberteils vom Unterteil im Wesentlichen zu verhindern, kann vorgesehen sein, dass eine obere Schnappfläche der Schnappnase einen Winkel α von 90° oder kleiner, vorzugsweise zwischen 75° und 90°, mit einer inneren Oberfläche des Stegs einschließt. Die obere Schnappfläche der Schnappnase ist dabei eine Fläche, die der Deckfläche zugewandt ist. Die innere Oberfläche des Stegs ist der Schnappnase zugewandt und weist zur Drehachse des Oberteils hin. Mit anderen Worten schließt die Schnappnase einen spitzen Winkel mit dem Steg ein und bildet dadurch eine Hinterschneidung aus.

In einer Weiterbildung der Erfindung ist ein Gewürzmahlwerk vorgesehen, das folgendes aufweist:
- ein Oberteil gemäß den obigen Ausführungen;
- ein Unterteil mit einem vorzugsweise umlaufenden Schnappvorsprung, wobei das Unterteil mit dem Oberteil drehbar über eine Schnappverbindung zwischen Schnappelement und Schnappvorsprung verbunden ist.

Bei dieser Weiterbildung ist das Oberteil mit dem Unterteil drehbar verbunden. Das Schnappelement ist dabei mit dem Schnappvorsprung verschnappt, sodass ein Lösen des Oberteils vom Unterteil verhindert, eine Drehung der beiden Teile zueinander jedoch ermöglicht wird. Der Schnappvorsprung ist vorzugsweise umlaufend ausgebildet, d.h. in sich geschlossen. Der Schnappvorsprung weist insbesondere an einer Unterseite eine vorzugsweise wölbungsfreie Gleitfläche auf, die ein Gleiten des Schnappelements in Umfangsrichtung des Gewürzmahlwerks ermöglicht. Die Schnappverbindung kann im Bedarfsfall durch Verbiegen des Schnappelements gelöst werden. Das Oberteil weist mehrere gleichartige Schnappelemente auf, die im zusammengesetzten Zustand des Gewürzmahlwerks mit dem Schnappvorsprung wie beschrieben verschnappt sind.

Es kann vorgesehen sein, dass das Unterteil eine insbesondere zylindermantelförmige oder konische Mantelfläche aufweist, an deren inneren Oberfläche Mahlvorsprünge und an deren äußeren Oberfläche der Schnappvorsprung vorgesehen ist. Insbesondere kann vorgesehen sein, dass sich der Schnappvorsprung an oder benachbart zu einem oberen Ende oder in der oberen Hälfte der äußeren Oberfläche der Mantelfläche befindet.

In einer bevorzugten Ausführungsform ist vorgesehen, dass das Unterteil benachbart zu einem unteren freien Ende der Mantelfläche einen Anlagevorsprung aufweist. Durch den Anlagevorsprung wird eine Art Drehführung für den Oberteil erzielt und es kann ein Nach-Innen-Drücken der umlaufenden Mantelfläche des Oberteils verhindert werden.

Die Erfindung wird ebenfalls durch ein Verfahren zur Herstellung eines Oberteils gemäß den obigen Ausführungen gelöst. Das Verfahren weist folgende Schritte auf:
- Bereitstellen eines mehrteiligen Spritzgusswerkzeugs mit einem ersten Werkzeugteil und einem zweiten Werkzeugteil, wobei ein Hohlraum zwischen dem ersten Werkzeugteil und dem zweiten Werkzeugteil ausgebildet wird, welcher dem Oberteil entspricht, wobei zur Ausbildung eines Schnappelements ein Formgebungselement des ersten Werkzeugteils in eine Ausnehmung des zweiten Werkzeugteils eingeführt wird und das Schnappelement zwischen Werkzeugflächen des Formgebungselements des ersten Werkzeugteils und der Ausnehmung des zweiten Werkzeugteils ausgebildet wird;
- Einbringen eines aushärtendes Kunststoffmaterials über eine Düse in den Hohlraum;
- Trennen des ersten und des zweiten Werkzeugteils, wobei das Formgebungselement durch eine Öffnung des Oberteils aus der Ausnehmung entfernt wird;
- Auswerfen des Oberteils.

Hinsichtlich der Vorteile des Oberteils wird auf die obigen Ausführungen verweisen. Mit dem erfindungsgemäßen Verfahren ist es wie beschrieben möglich, das Oberteil zu erzeugen und vor dem Auswerfen des Oberteils, d.h. Entfernen des Oberteils vom Spritzgusswerkzeug, das Formgebungselement des Spritzgusswerkzeugs, das zur Ausformung des Schnappelements verwendet wird, durch die Öffnung des Oberteils zu entfernen. Dadurch wird die eingangs erwähnte Zwangsentformung vermieden. Das Spritzgusswerkzeug umfasst zumindest einen ersten Werkzeugteil und einen zweiten Werkzeugteil. Es können aber auch noch weitere Werkzeugteile vorgesehen sein. Im zusammengefügten Zustand des Spritzgusswerkzeuges wird, wie im Stand der Technik üblich, ein Hohlraum zwischen den Werkzeugteilen ausgebildet. Dieser Hohlraum bzw. dessen Begrenzungsfläche gibt die Form des zu erzeugenden Oberteils vor. Der Raum zwischen den Werkzeugflächen des Formgebungselement und der Ausnehmung, in welchem das Schnappelement ausgebildet wird, bildet einen Teilbereich des Hohlraums. Es kann vorgesehen sein, dass die Düse, die das Kunststoffmaterial in den Hohlraum einbringt, am ersten oder zweiten Werkzeugteil angeordnet ist. Erfindungsgemäß ist vorgesehen, dass das Schnappelement zwischen den Werkzeugflächen des Formgebungselements des ersten Werkzeugteils und der Ausnehmung des zweiten Werkzeugteils ausgebildet wird. Zu diesem Zweck ist das Formgebungselement während des Gießens und Aushärtens in die Ausnehmung eingefügt. Die Öffnung des Oberteils wird dabei um das Formgebungselement ausgebildet. Nach dem Aushärten des Kunststoffmaterials und vor dem Auswerfen des Oberteils werden der erste und der zweite Werkzeugteil voneinander getrennt. Dabei wird das Formgebungselement aus der Ausnehmung herausgezogen, und zwar durch die Öffnung des erzeugten Oberteils. Wenn mehrere Öffnungen vorgesehen sind, kann das Spritzgusswerkzeug eine entsprechende Anzahl an Ausnehmungen und Formgebungselementen aufweisen. Das Formgebungselement kann im einfachsten Fall quaderförmig sein. Wenn ein in Draufsicht kreisbogenförmiges Schnappelement erzeugt werden soll, kann das Formgebungselement eine Wölbung aufweisen. Auch die Ausnehmung kann eine entsprechende Wölbung aufweisen.

Vorteilhaft ist, wenn das Formgebungselement des ersten Werkzeugteils und/oder die Ausnehmung des zweiten Werkzeugteils eine Einkerbung zur Ausformung der Schnappnase aufweist. Die Einkerbung kann dabei insbesondere an einer Unterseite des Formgebungselements, welche dem übrigen ersten Werkzeugteil abgewandt ist, vorgesehen sein.

Eine vorteilhafte Weiterbildung des Verfahrens, welche die Herstellung eines Mahlwerks ermöglicht, umfasst folgende Schritte:
- Herstellen eines Oberteils gemäß dem oben beschriebenen Verfahren;
- Herstellen eines Unterteils mit einem vorzugsweise umlaufenden Schnappvorsprung;
- Verbinden des Oberteils und des Unterteils über eine Schnappverbindung zwischen dem Schnappelement und dem Schnappvorsprung.

Die Herstellung des Unterteils kann ebenfalls durch ein Spritzgussverfahren erfolgen.

Die obige Aufgabe wird auch durch ein Spritzgusswerkzeug zum Herstellen eines Oberteils gemäß den obigen Ausführungen gelöst. Das Spritzgusswerkzeug besteht aus zumindest einem ersten und einem zweiten Werkzeugteil, wobei in einer Produktionsstellung der Spritzgussform zwischen dem ersten und dem zweiten Werkzeugteil ein Hohlraum ausgebildet ist, welcher dem Oberteil entspricht, wobei zur Ausbildung des Schnappelements ein Formgebungselement des ersten Werkzeugteils in eine Ausnehmung des zweiten Werkzeugteils eingeführt ist und ein Teilbereich des Hohlraums, in welchem das Schnappelement ausgebildet wird, von Werkzeugflächen des Formgebungselements des ersten Werkzeugteils und der Ausnehmung des zweiten Werkzeugteils begrenzt ist.

Hinsichtlich der Vorteile des Oberteils bzw. der Verwendung des Spritzgusswerkzeugs wird auf die obigen Ausführungen zum Oberteil und zum Herstellungsverfahren verwiesen. Der erste Werkzeugteil ist von dem zweiten Werkzeugteil lösbar. In der Produktionsstellung sind diese zur Ausbildung des Hohlraums für den Oberteil zusammengefügt. Am ersten und/oder zweiten Werkzeugteil kann eine Düse zur Einbringung eines aushärtenden Kunststoffmaterials in den Hohlraum angebracht sein.

Bevorzugt ist, wenn das Formgebungselement des ersten Werkzeugteils und/oder die Ausnehmung des zweiten Werkzeugteils eine Einkerbung zur Ausformung der Schnappnase aufweist. Die Einkerbung kann dabei insbesondere an einer Unterseite, welche von dem übrigen ersten Werkzeugteil abgewandt ist, vorgesehen sein.

Im Folgenden wird die Erfindung an Hand von Figuren näher erläutert.
Fig. 1 zeigt ein Gewürzmahlwerk aus dem Stand der Technik im Querschnitt;
Fig. 2 zeigt einen Schritt bei der Herstellung des Oberteils aus dem Stand der Technik und soll die Problematik der Zwangsentformung verdeutlichen;
Fig. 3 zeigt ein erfindungsgemäßes Oberteil in einer Schrägansicht von unten;
Fig. 4 zeigt ein erfindungsgemäßes Oberteil im Querschnitt;
Fig. 5 zeigt ein Schnappelement in vergrößerter Darstellung;
Fig. 6 zeigt ein zusammengesetztes Gewürzmahlwerk;
Fig. 7 zeigt ein zusammengesetztes Gewürzmahlwerk in einer Schrägansicht von oben; und
Fig. 8, Fig. 8a, Fig. 9 und Fig. 10 zeigen ein Herstellungsverfahren eines erfindungsgemäßen Oberteils.

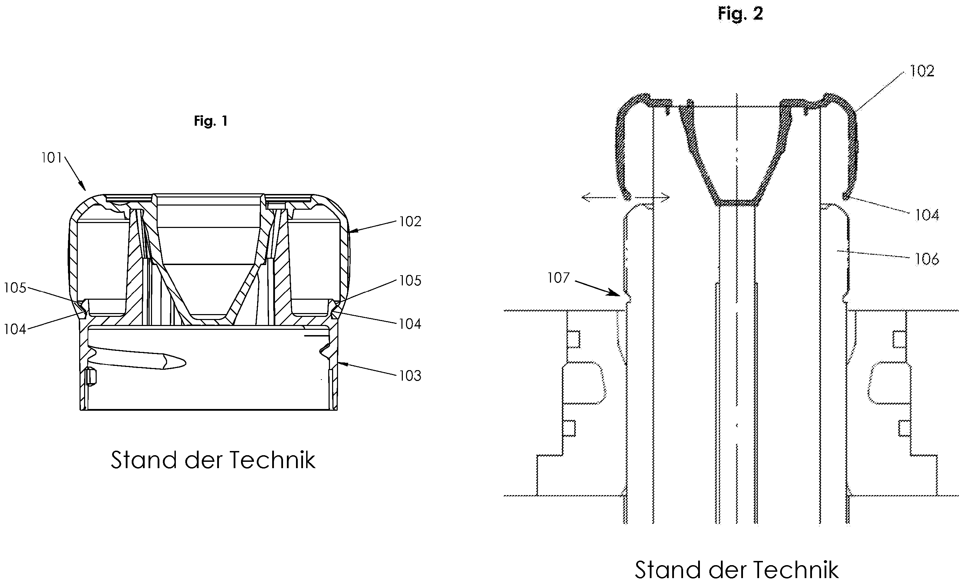

Fig. 1 zeigt ein Gewürzmahlwerk 101 aus dem Stand der Technik mit einem Oberteil 102 und einem Unterteil 103. Das Oberteil 102 besitzt einen umlaufenden, nach innen weisenden Vorsprung 104, welcher im zusammengesetzten Zustand des Gewürzmahlwerks 101 in eine umlaufende, nach außen weisende Nut 105 des Unterteils 103 eingreift.

In Fig. 2 wird durch die Pfeile veranschaulicht, dass der Oberteil 102 beim Abziehen von einem Spritzgusswerkzeug 106 zwangsweise verformt wird, weil der Vorsprung 104 über jenen Teil 107 des Spritzgusswerkzeugs 106 abgezogen werden muss, der den Vorsprung 104 bei der Herstellung ausformt. Dies kann zu Verformungen und Beschädigungen des Oberteils 102, beispielsweise Abbrechen des umlaufenden Vorsprungs 104, führen. Hinterschneidungen des Vorsprungs 104 können daher beim Stand der Technik nicht ausgebildet werden.

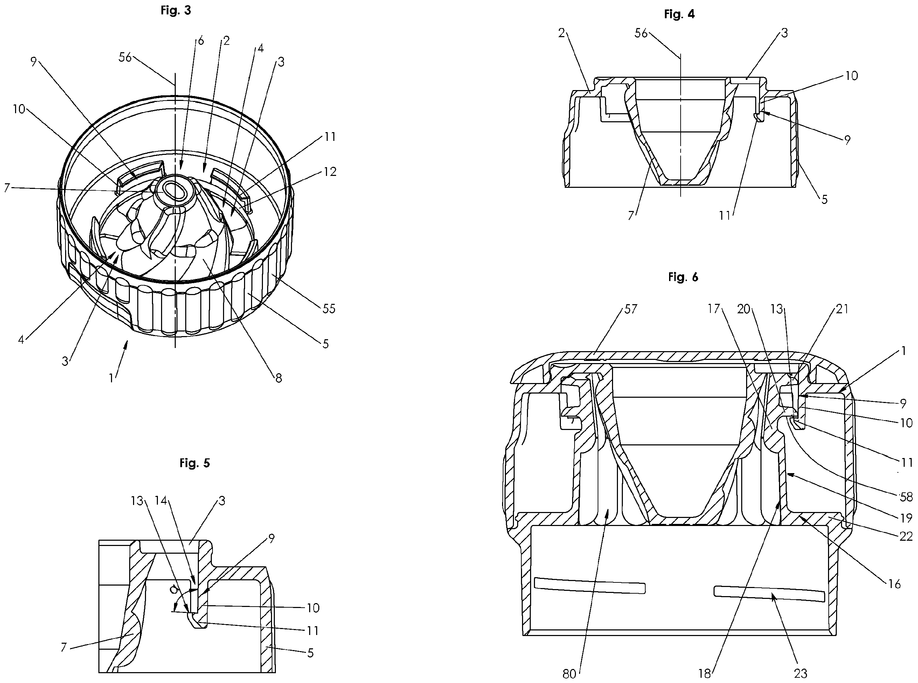

Fig. 3 zeigt eine bevorzugte Ausführungsform eines erfindungsgemäßen Oberteils 1 in einer Ansicht von unten. Das Oberteil 1 besitzt eine Deckfläche 2 mit mehreren Öffnungen 3, die in Draufsicht kreisbogenförmig gebogen und symmetrisch um eine Drehachse 56 angeordnet sind. Wie in Fig. 4 ersichtlich, kann die Deckfläche auch abgestuft sein. Die Öffnungen 3 werden vorzugsweise durch Durchtrittsöffnungen 4 für gemahlene Gewürze gebildet. Des Weiteren besitzt das Oberteil 1 eine umlaufende Mantelfläche 5, welche an einen umlaufenden Rand der Deckfläche 2 anschließt. Die Mantelfläche 5 des Oberteils 1 kann an ihrer Außenseite erhabene Griffelemente 55 aufweisen. An einer Innenseite 6 der Deckfläche 2 weist das Oberteil 1 als Mahlelement 7 einen abschnittsweise kegelstumpfförmigen Mahlkonus auf. Alternativ dazu kann auch eine Halterung für ein Mahlelement 7 vorgesehen sein. Dies ist insbesondere dann vorteilhaft, wenn das Mahlelement 7 aus einem anderen Material als das Oberteil 1 gefertigt ist. Die Öffnungen 3 an der Deckfläche 2 sind um das Mahlelement 7 ausgebildet. Das Mahlelement 7 weist an einer Außenfläche Mahlvorsprünge 8 zur Zermahlung des Gewürzes auf.

In Draufsicht fluchtend zu den Öffnungen 3 besitzt das Oberteil 1 jeweils Schnappelemente 9. Es muss allerdings nicht an jeder Öffnung 3 ein Schnappelement 9 angeordnet sein. Die Schnappelemente 9 weisen jeweils einen Steg 10 und eine nach innen zu der Drehachse 56 weisende Schnappnase 11 auf. Die Stege 10 der Schnappelemente 9 sind im Wesentlichen rechtwinkelig zu der Deckfläche 2 angeordnet und befinden sich jeweils vorzugsweise am äußeren (der Drehachse 56 abgewandten) Rand 12 einer Öffnung 3.

Wie insbesondere aus Fig. 5 hervorgeht, schließt eine obere Schnappfläche 13 der Schnappnase 11 einen Winkel α von 90° oder kleiner, vorzugsweise zwischen 75° und 90°, mit einer inneren Oberfläche 14 des Stegs 10 ein. Mit anderen Worten schließt die Schnappnase 11 mit dem Steg 10 einen spitzen Winkel ein und bildet so eine Hinterschneidung aus.

Fig. 6 zeigt ein zusammengesetztes Gewürzmahlwerk 15 mit einer optionalen Gewürzmahlwerkskappe 57. Das Gewürzmahlwerk 15 besitzt einen Oberteil 1 und einen Unterteil 16. Der Unterteil 16 weist eine insbesondere im Wesentlichen zylinderförmige oder konische Mantelfläche 17 auf, an deren inneren Oberfläche 18 Mahlvorsprünge 80 angeordnet sind, die mit den Mahlvorsprüngen 8 des Mahlkonus 7 zusammenwirken und bei einer Drehung des Oberteils 1 gegenüber dem Unterteil 16 das Gewürz zermahlen. An der äußeren Oberfläche 19 der insbesondere zylinderförmigen oder konischen Mantelfläche 17 ist ein umlaufender Schnappvorsprung 20 vorgesehen. Im gezeigten zusammengesetzten Zustand des Gewürzmahlwerks 15 ist das Unterteil 16 mit dem Oberteil 1 drehbar über eine Schnappverbindung zwischen den Schnappelementen 9 und dem Schnappvorsprung 20 verbunden. Durch die Schnappverbindung wird ein unbeabsichtigtes Lösen des Oberteils 1 vom Unterteil 16 verhindert, eine Drehung des Oberteils 1 gegenüber dem Unterteil 16 jedoch ermöglicht. In Fig. 6 ist erkennbar, dass die obere Schnappfläche 13 der Schnappnase 11 an einer Gleitfläche 58 an der Unterseite des Schnappvorsprungs 20 anliegt. Natürlich kann zwischen dem Schnappvorsprung 20 und der oberen Schnappfläche 13 der Schnappnase 11 auch ein Spiel vorhanden sein. Zur Abstützung und Führung des Oberteils 1 weist der Unterteil 16 am oberen Rand der äußeren Oberfläche 19 einen weiteren Vorsprung 21 auf.

Benachbart zu einem freien unteren Ende der Mantelfläche 17 weist das Unterteil 16 zudem einen insbesondere umlaufenden Anlagevorsprung 22 auf. Der Anlagevorsprung 22 steht weiter von der Mantelfläche 17 ab als der Schnappvorsprung 20. Der Anlagevorsprung 22 verhindert ein ungewolltes Nach-Innen-Drücken der umlaufenden Mantelfläche 5 des Oberteils 1. Des Weiteren weist der Unterteil 16 noch einen Gewindeabschnitt 23 auf, der in der gezeigten Ausführungsform an den Anlagevorsprung 22 anschließt. Über den Gewindeabschnitt 23 kann der Unterteil 16 mit einem Gewürzbehälter (nicht gezeigt) verbunden werden.

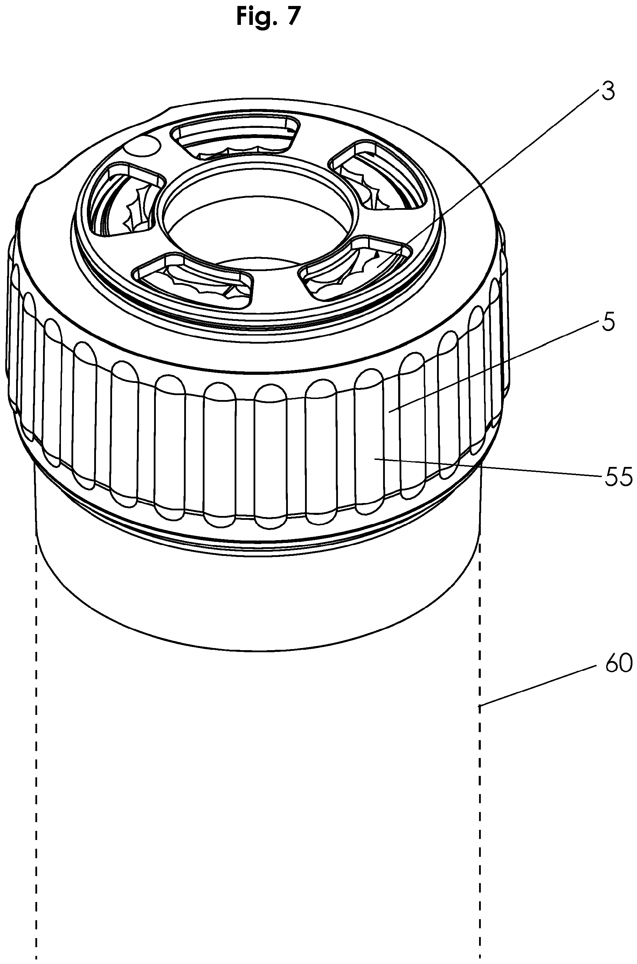

Fig. 7 zeigt das Gewürzmahlwerk 15 in einer Ansicht von schräg oben. Strichliert ist hierbei ein Gewürzbehälter 60 angedeutet, der mit dem Gewürzmahlwerk 15 verbunden ist.

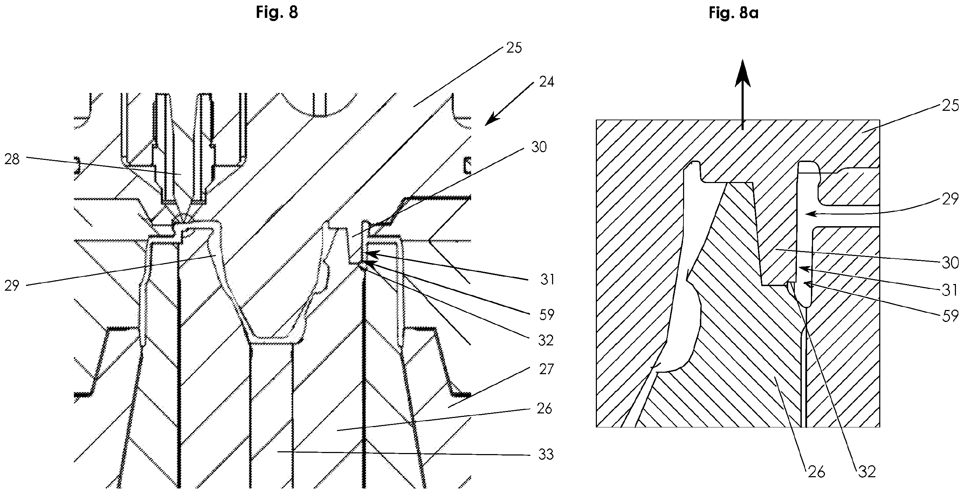

Die Figuren 8-10 zeigen die Herstellung des erfindungsgemäßen Oberteils 1 mit einem Spritzgusswerkzeug 24. Das dargestellte Spritzgusswerkzeug 24 weist einen ersten Werkzeugteil 25, einen zweiten Werkzeugteil 26 sowie weitere Werkzeugteile 27 auf. An dem ersten Werkzeugteil 25 ist eine Düse 28 zur Einbringung eines aushärtenden Kunststoffmaterials angeordnet. In Fig. 8 befindet sich das Spritzgusswerkzeug 24 in einer Produktionsstellung. Zwischen dem ersten Werkzeugteil 25 und dem zweiten Werkzeugteil 26 wird in der Produktionsstellung ein Hohlraum 29 ausgebildet, der die Form des zu erzeugenden Oberteils 1 vorgibt. In Fig. 8 ist ein Formgebungselement 30 am ersten Werkzeugteil 25 im Querschnitt dargestellt, welches zur Erzeugung des Schnappelements 9 in eine Ausnehmung 31 des zweiten Werkzeugteils 26 eingefügt ist. Zwischen den Werkzeugflächen des Formgebungselements 30 und der Ausnehmung 31 wird ein Teilbereich 59 des Hohlraums 29 ausgebildet, der die Form des Schnappelements 9 vorgibt. Die Anzahl an Formgebungselementen 30 und Ausnehmungen 31 entspricht der Anzahl an Schnappelementen 9 am zu erzeugenden Oberteil 1. An einer Unterseite des Formgebungselements 30, welche von dem übrigen ersten Werkzeugelement 25 abgewandt ist, befindet sich eine Einkerbung 32 zur Erzeugung der Schnappnase 11 des Schnappelements 9. Die Schnappnase kann aber auch durch eine entsprechende Freilassung im Teilbereich 59 erzeugt werden. In Fig. 8 ist noch kein Kunststoffmaterial in den Hohlraum 29 eingefüllt.

Fig. 8a zeigt einen Ausschnitt von Fig. 8 betreffend den Teilbereich 59 und das Formgebungselement 30 im Detail.

Nach dem Aushärten des Kunststoffmaterials wird der erste Werkzeugteil 25 von dem zweiten Werkzeugteil 26 getrennt. Dabei wird erfindungsgemäß das Formgebungselement 30 durch die Öffnung 3 des erzeugten Oberteils 1 aus der Ausnehmung 31 gezogen, wodurch das Schnappelement 9 des erzeugten Oberteils 1 folglich ohne Verformung von dem Spritzgusswerkzeug 24 abgenommen bzw. ausgeworfen werden kann, da das Formgebungselement 30 das Abziehen des Oberteils 1 nicht mehr wie beim Stand der Technik blockiert. Das Trennen des ersten Werkzeugteils 25 vom zweiten Werkzeugteil 26 ist in Fig. 8a durch den Pfeil verdeutlicht.

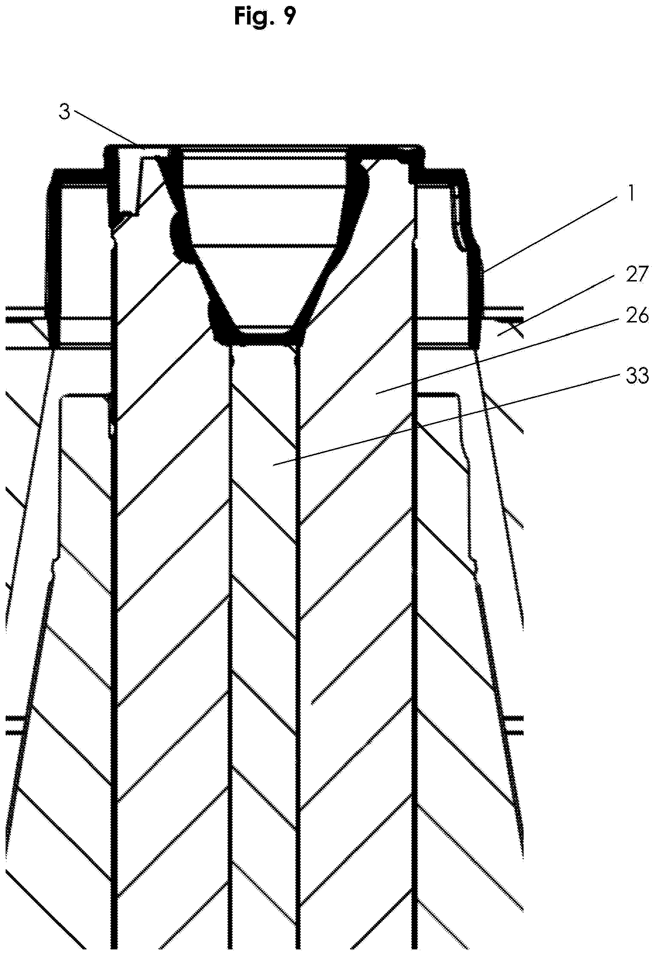

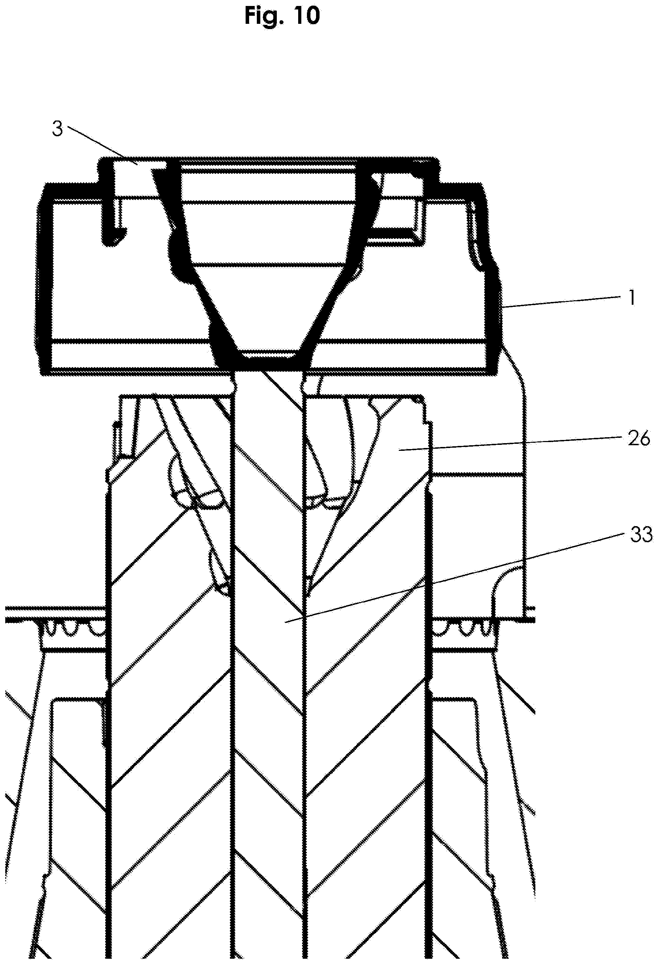

Das Auswerfen des Oberteils 1 ist in den Figuren 9 und 10 dargestellt. Zunächst werden in der gezeigten Ausführungsform die weiteren Werkzeugteile 27 entfernt. Allgemein sind weitere Werkzeugteile 27 nicht zwingend notwendig. Anschließend wird ein Auswurfstift 33 aus dem zweiten Werkzeugteil 26 ausgefahren, der das Oberteil 1 nach oben schiebt, sodass dieses leichter abgenommen werden kann.

## Patentansprüche

1. Oberteil (1) für ein Gewürzmahlwerk (15), welches zumindest teilweise aus Kunststoffmaterial besteht und folgendes aufweist:
- eine obere Deckfläche (2) mit zumindest zwei Öffnungen (3), insbesondere Durchtrittsöffnungen (4) für gemahlene Gewürze, welche entlang eines gedachten Kreises um eine Drehachse (56) angeordnet sind,
- eine umlaufende Mantelfläche (5) und
- ein Mahlelement (7) oder eine Halterung für das Mahlelement (7),
**dadurch gekennzeichnet, dass** in Draufsicht fluchtend zu den zumindest zwei Öffnungen (3) jeweils ein vorzugsweise elastisch verformbares Schnappelement (9), mit welchem der Oberteil (1) mit einem Unterteil (16) drehbar verbindbar ist, vorgesehen ist, wobei die Schnappelemente (9) jeweils einen von der jeweiligen Öffnung (3) in Richtung des Mahlelements (7) oder der Halterung abstehenden Steg (10) mit einer nach innen zu der Drehachse (56) weisenden Schnappnase (11) aufweisen.

2. Oberteil (1) nach Anspruch 1, **dadurch gekennzeichnet, dass** zumindest drei Öffnungen (3) vorgesehen sind, welche entlang eines gedachten Kreises angeordnet sind.

3. Oberteil (1) nach Anspruch 1 oder 2, **dadurch gekennzeichnet, dass** fluchtend zu jeder Öffnung (3) ein Schnappelement (9) angeordnet ist, wobei die Schnappelemente (9) voneinander beanstandet sind.

4. Oberteil (1) nach einem der Ansprüche 1 bis 3, **dadurch gekennzeichnet, dass** die Öffnungen (3) und die Schnappelemente (9) in Draufsicht kreisbogenförmig sind.

5. Oberteil (1) nach einem der Ansprüche 1 bis 4, **dadurch gekennzeichnet, dass** eine obere Schnappfläche (13) der Schnappnase (11) einen Winkel α von 90° oder kleiner, vorzugsweise zwischen 75° und 90°, mit einer inneren Oberfläche (14) des Stegs (10) einschließt.

6. Gewürzmahlwerk (15), aufweisend:
- ein Oberteil (1) nach einem der vorhergehenden Ansprüche;
- ein Unterteil (16) mit einem vorzugsweise umlaufenden Schnappvorsprung (20), wobei das Unterteil (16) mit dem Oberteil (1) drehbar über eine Schnappverbindung zwischen Schnappelement (9) und Schnappvorsprung (20) verbunden ist.

7. Gewürzmahlwerk (15) nach Anspruch 6, **dadurch gekennzeichnet, dass** das Unterteil (16) eine insbesondere im Wesentlichen zylindermantelförmige oder konische Mantelfläche (17) aufweist, an deren inneren Oberfläche (18) Mahlvorsprünge (80) und an deren äußeren Oberfläche (19) der Schnappvorsprung (20) vorgesehen sind.

8. Gewürzmahlwerk (15) nach Anspruch 6 oder 7, **dadurch gekennzeichnet, dass** das Unterteil (16) benachbart zu einem unteren freien Ende der Mantelfläche (17) einen Anlagevorsprung (22) aufweist.

9. Verfahren zur Herstellung eines Oberteils (1) nach einem der Ansprüche 1 bis 5, mit den Schritten:
- Bereitstellen eines mehrteiligen Spritzgusswerkzeugs (24) mit einem ersten Werkzeugteil (25) und einem zweiten Werkzeugteil (26), wobei ein Hohlraum (29) zwischen dem ersten Werkzeugteil (25) und dem zweiten Werkzeugteil (26) ausgebildet wird, welcher dem Oberteil (1) entspricht, wobei zur Ausbildung eines Schnappelements (9) ein Formgebungselement (30) des ersten Werkzeugteils (25) in eine Ausnehmung (31) des zweiten Werkzeugteils (26) eingeführt wird und das Schnappelement (9) zwischen Werkzeugflächen des Formgebungselements (30) des ersten Werkzeugteils (25) und der Ausnehmung (31) des zweiten Werkzeugteils (26) ausgebildet wird;
- Einbringen eines aushärtendes Kunststoffmaterials über eine Düse (28) in den Hohlraum (29);
- Trennen des ersten (25) und des zweiten Werkzeugteils (26), wobei das Formgebungselement (30) durch eine Öffnung (3) des Oberteils (1) aus der Ausnehmung (31) entfernt wird;
- Auswerfen des Oberteils (1).

10. Verfahren nach Anspruch 9, **dadurch gekennzeichnet, dass** das Formgebungselement (30) des ersten Werkzeugteils (25) und/oder die Ausnehmung (31) des zweiten Werkzeugteils (26) eine Einkerbung (32) zur Ausformung der Schnappnase (11) aufweist.

11. Verfahren zur Herstellung eines Gewürzmahlwerks (15) nach einem der Ansprüche 6 bis 8, mit den Schritten:
- Herstellen eines Oberteils (1) nach dem Verfahren nach Anspruch 9 oder 10;
- Herstellen eines Unterteils (16) mit einem vorzugsweise umlaufenden Schnappvorsprung (20);
- Verbinden des Oberteils und des Unterteils über eine Schnappverbindung zwischen Schnappelement (9) und Schnappvorsprung (20) .

12. Spritzgusswerkzeug (24) zum Herstellen eines Oberteils (1) nach einem der Ansprüche 1 bis 5 bestehend aus zumindest einem ersten (25) und einem zweiten Werkzeugteil (26), **dadurch gekennzeichnet, dass** in Produktionsstellung des Spritzgusswerkzeugs (24) zwischen dem ersten (25) und dem zweiten Werkzeugteil (26) ein Hohlraum (29) ausgebildet ist, welcher dem Oberteil (1) entspricht, wobei zur Ausbildung des Schnappelements (9) ein Formgebungselement (30) des ersten Werkzeugteils (25) in eine Ausnehmung (31) des zweiten Werkzeugteils (26) eingeführt ist und ein Teilbereich (59) des Hohlraums (29), in welchem das Schnappelement (9) ausgebildet wird, von Werkzeugflächen des Formgebungselements (30) des ersten Werkzeugteils (25) und der Ausnehmung (31) des zweiten Werkzeugteils (26) begrenzt ist.

13. Spritzgusswerkzeug (24) nach Anspruch 12, **dadurch gekennzeichnet, dass** das Formgebungselement (30) des ersten Werkzeugteils (25) und/oder die Ausnehmung (31) des zweiten Werkzeugteils (26) eine Einkerbung (32) zur Ausformung der Rastnase (11) aufweist.

## Claims

1. Upper part (1) for a spice mill (15), consisting at least partly of plastics material and comprising the following:
- an upper cover surface (2) having at least two openings (3), in particular throughopenings (4) for ground spices, arranged along an imaginary circle about an axis of rotation (56),
- a circumferential curved surface (5), and
- a milling element (7) or a holder for the milling element (7),
**characterised in that** a preferably elastically deformable snap-action element (9), by means of which the upper part (1) can be rotatably connected to a lower part (16), is provided in alignment with the at least two openings (3) in plan view, the snap-action elements (9) each comprising a projecting piece (10) which protrudes from each opening (3) in the direction of the milling element (7) or the holder and having a snap-action lug (11) which points inwards towards the axis of rotation (56).

2. Upper part (1) according to claim 1, **characterised in that** at least three openings (3) which are arranged along an imaginary circle are provided.

3. Upper part (1) according to either claim 1 or claim 2, **characterised in that** a snap-action element (9) is arranged in alignment with each opening (3), the snap-action elements (9) being spaced apart from one another.

4. Upper part (1) according to any of claims 1 to 3, **characterised in that** the openings (3) and the snap-action elements (9) are circular-arc shaped in plan view.

5. Upper part (1) according to any of claims 1 to 4, **characterised in that** an upper snap-action surface (13) of the snap-action lug (11) forms an angle α of 90° or less, preferably between 75° and 90°, with an inner surface (14) of the projecting piece (10).

6. Spice mill (15), comprising:
- an upper part (1) according to any of the preceding claims;
- a lower part (16) having a preferably circumferential snap-action projection (20), the lower part (16) being rotatably connected to the upper part (1) via a snap-action connection between the snap-action element (9) and the snap-action projection (20).

7. Spice mill (15) according to claim 6, **characterised in that** the lower part (16) has an in particular substantially cylindrically enveloping or conical curved surface (17), on the inner surface (18) of which milling projections (80) are provided and on the outer surface (19) of which the snap-action projection (20) is provided.

8. Spice mill (15) according to either claim 6 or claim 7, **characterised in that** the lower part (16) has a contact projection (22) adjacent to a lower free end of the curved surface (17).

9. Method for producing an upper part (1) according to any of claims 1 to 5, having the steps of:
- providing a multi-part injection moulding tool (24) having a first tool part (25) and a second tool part (26), wherein a cavity (29) which corresponds to the upper part (1) is formed between the first tool part (25) and the second tool part (26), wherein a shaping element (30) of the first tool part (25) is inserted into a recess (31) of the second tool part (26) in order to form a snap-action element (9) and the snap-action element (9) is formed between tool surfaces of the shaping element (30) of the first tool part (25) and the recess (31) of the second tool part (26);
- introducing a hardening plastics material into the cavity (29) via a nozzle (28);
- separating the first (25) and the second tool part (26), wherein the shaping element (30) is removed from the recess (31) through an opening (3) in the upper part (1);
- ejecting the upper part (1).

10. Method according to claim 9, **characterised in that** the shaping element (30) of the first tool part (25) and/or the recess (31) of the second tool part (26) has a notch (32) for forming the snap-action lug (11).

11. Method for producing a spice mill (15) according to any of claims 6 to 8, having the steps of:
- producing an upper part (1) according to the method according to either claim 9 or claim 10;
- producing a lower part (16) having a preferably circumferential snap-action projection (20);
- connecting the upper part and the lower part via a snap-action connection between the snap-action element (9) and the snap-action projection (20).

12. Injection moulding tool (24) for producing an upper part (1) according to any of claims 1 to 5, consisting of at least a first (25) and a second tool part (26), **characterised in that**, in the production position of the injection moulding tool (24), a cavity (29) which corresponds to the upper part (1) is formed between the first tool part (25) and the second tool part (26), a shaping element (30) of the first tool part (25) being inserted into a recess (31) of the second tool part (26) in order to form the snap-action element (9), and a partial region (59) of the cavity (29) in which the snap-action element (9) is formed being delimited by tool surfaces of the shaping element (30) of the first tool part (25) and the recess (31) of the second tool part (26).

13. Injection moulding tool (24) according to claim 12, **characterised in that** the shaping element (30) of the first tool part (25) and/or the recess (31) of the second tool part (26) has a notch (32) for forming the latching lug (11).

## Revendications

1. Pièce supérieure (1) pour un moulin à épices (15), laquelle est composée au moins partiellement de matière plastique et présente ce qui suit :
- une surface de recouvrement supérieure (2) avec au moins deux ouvertures (3), en particulier des ouvertures de passage (4) pour des épices moulues, lesquelles sont agencées le long d'un cercle imaginaire autour d'un axe de rotation (56),
- une surface d'enveloppe (5) périphérique et
- un élément de broyage (7) ou une retenue pour l'élément de broyage (7),
**caractérisée en ce que**, en vue de dessus, en alignement avec les au moins deux ouvertures (3) est respectivement prévu un élément d'encliquetage (9) déformable et de préférence élastique, avec lequel la pièce supérieure (1) peut être reliée en rotation à une pièce inférieure (16), dans lequel les éléments d'encliquetage (9) présentent respectivement une traverse (10) éloignée de l'ouverture (3) respective dans la direction de l'élément de broyage (7) ou de la retenue avec un nez d'enclenchement (11) pointant vers l'intérieur vers l'axe de rotation (56).

2. Pièce supérieure (1) selon la revendication 1, **caractérisée en ce que** sont prévues au moins trois ouvertures (3), lesquelles sont agencées le long d'un cercle imaginaire.

3. Pièce supérieure (1) selon la revendication 1 ou 2, **caractérisée en ce qu'**en alignement avec chaque ouverture (3) est agencé un élément d'encliquetage (9), dans lequel les éléments d'encliquetage (9) sont espacés les uns des autres.

4. Pièce supérieure (1) selon l'une des revendications 1 à 3, **caractérisée en ce que**, en vue de dessus, les ouvertures (3) et les éléments d'encliquetage (9) sont en arc de cercle.

5. Pièce supérieure (1) selon l'une des revendications 1 à 4, **caractérisée en ce qu'**une surface d'encliquetage (13) supérieure du nez d'enclenchement (11) forme un angle a de 90° ou moins, de préférence entre 75° et 90°, avec une surface intérieure (14) de la traverse (10).

6. Moulin à épices (15), présentant :
- une pièce supérieure (1) selon l'une des revendications précédentes ;
- une pièce inférieure (16) avec une saillie d'encliquetage (20) de préférence périphérique, dans lequel la pièce inférieure (16) est reliée en rotation à la pièce supérieure (1) via une liaison d'encliquetage entre élément d'encliquetage (9) et saillie d'encliquetage (20).

7. Moulin à épices (15) selon la revendication 6, **caractérisé en ce que** la pièce inférieure (16) présente une surface d'enveloppe (17) en particulier essentiellement en forme d'enveloppe de cylindre ou conique, au niveau de la surface intérieure (18) de laquelle sont prévues des saillies de broyage (80) et au niveau de la surface extérieure (19) de laquelle est prévue la saillie d'encliquetage (20).

8. Moulin à épices (15) selon la revendication 6 ou 7, **caractérisé en ce que** la pièce inférieure (16) présente une saillie d'appui (22) dans le voisinage d'une extrémité libre inférieure de la surface d'enveloppe (17).

9. Procédé de fabrication d'une pièce supérieure (1) selon l'une des revendications 1 à 5, avec les étapes consistant à :
- fournir un outil de moulage par injection (24) en plusieurs pièces avec une première pièce d'outil (25) et une seconde pièce d'outil (26), dans lequel entre la première pièce d'outil (25) et la seconde pièce d'outil (26) est conçue une cavité (29), laquelle correspond à la pièce supérieure (1), dans lequel un élément de façonnage (30) de la première pièce d'outil (25) est inséré dans un évidement (31) de la seconde pièce d'outil (26) pour former un élément d'encliquetage (9), et l'élément d'encliquetage (9) est conçu entre des surfaces d'outil de l'élément de façonnage (30) de la première pièce d'outil (25) et l'évidement (31) de la seconde pièce d'outil (26) ;
- introduire une matière plastique durcissante dans la cavité (29) via une buse (28) ;
- séparer la première (25) et la seconde pièce d'outil (26), dans lequel l'élément de façonnage (30) est retiré de l'évidement (31) par une ouverture (3) de la pièce supérieure (1) ;
- éjecter la pièce supérieure (1).

10. Procédé selon la revendication 9, **caractérisé en ce que** l'élément de façonnage (30) de la première pièce d'outil (25) et/ou l'évidement (31) de la seconde pièce d'outil (26) présente une encoche (32) pour façonner le nez d'enclenchement (11).

11. Procédé de fabrication d'un moulin à épices (15) selon l'une des revendications 6 à 8, avec les étapes consistant à :
- fabriquer une pièce supérieure (1) selon le procédé selon la revendication 9 ou 10 ;
- fabriquer une pièce inférieure (16) avec une saillie d'encliquetage (20) de préférence périphérique ;
- relier la pièce supérieure et la pièce inférieure via une liaison d'encliquetage entre élément d'encliquetage (9) et saillie d'encliquetage (20).

12. Outil de moulage par injection (24) pour fabriquer une pièce supérieure (1) selon l'une des revendications 1 à 5, composé d'au moins une première (25) et une seconde pièce d'outil (26), **caractérisé en ce qu'**en position de production de l'outil de moulage par injection (24) entre la première (25) et la seconde pièce d'outil (26) est conçue une cavité (29), laquelle correspond à la pièce supérieure (1), dans lequel un élément de façonnage (30) de la première pièce d'outil (25) est inséré dans un évidement (31) de la seconde pièce d'outil (26) pour former l'élément d'encliquetage (9), et une région partielle (59) de la cavité (29), dans laquelle est conçu l'élément d'encliquetage (9), est délimitée par des surfaces d'outil de l'élément de façonnage (30) de la première pièce d'outil (25) et de l'évidement (31) de la seconde pièce d'outil (26).

13. Outil de moulage par injection (24) selon la revendication 12, **caractérisé en ce que** l'élément de façonnage (30) de la première pièce d'outil (25) et/ou l'évidement (31) de la seconde pièce d'outil (26) présente une encoche (32) pour façonner le nez d'enclenchement (11).
